# EUROPÄISCHE PATENTANMELDUNG

(11) **EP 0 756 147 A1**
(43) Veröffentlichungstag der Anmeldung: **29.01.1997**
(21) Anmeldenummer: 96110629.1
(22) Anmeldetag: 01.07.1996
(51) Int. Cl.: F27B 9/10, F27B 9/30

(54) **Verfahren zum Brennen von Ziegeln, wie Lochziegeln od. dgl., und Tunnelofen-Anlage zur Durchführung des Verfahrens**

(30) Priorität: 30.06.1995 DE 19523513
(71) Anmelder: Keller GmbH, 49479 Ibbenbüren-Laggenbeck (DE)
(72) Erfinder: Averbeck, Laurenz, Dipl.-Ing., 49186 Bad Iburg (DE); Hoffmann, Holger, Dipl.-Ing., 58093 Hagen (DE); Lindemann, Helmut, Dipl.-Ing., 49497 Mettingen (DE)

(57) **Zusammenfassung**

Die Erfindung betrifft ein Verfahren zum Brennen von Lochziegeln und einen Tunnelofen zur Durchführung des Verfahrens und besteht darin, daß die Formlinge (5) - zwei- oder dreilagig durch einen Tunnel (1) mit in Längsrichtung umwälzenden Umwälzkreisen (U) fürs gasformige Medium bewegt und vertikal durchblasen werden.

## Beschreibung

Die Erfindung bezieht sich auf ein Verfahren zum Brennen von Lochziegeln und auf eine Tunnelofen-Anlage zur Durchführung des Verfahrens, wobei heiße Gase das Brenngut vertikal durchströmen.

Bei den bisher bekannten Verfahren und Tunnelöfen zum Brennen von Lochziegeln mit vertikaler Durchströmung besteht noch der Nachteil einer verhältnismäßig geringen Leistung, ungleichmäßiger Durchströmung und/oder eines hohen Energieverbrauchs.

Der Erfindung liegt daher die Aufgabe zugrunde, ein Verfahren zum Lochziegel-Brennen und eine entsprechende Tunnelofen-Anlage zu schaffen, womit einerseits in energiesparender Arbeitsweise eine Leistungssteigerung - bei vergleichbarer Reisezeit - erzielt wird und andererseits qualitätssteigernd schwindungsbedingte Rißbildung (Aufheiz- und Kühlrisse) weitgehendst vermieden sowie ein homogener Durchbrand gewährleistet wird.

Erfindungsgemäß wird dies durch ein Verfahren gemäß Patentanspruch 1 sowie durch eine Tunnelofen-Anlage gemäß Patentanspruch 6 gelöst. Weiterbildungen ergeben sich aus den Unteransprüchen.

Bei dem erfindungsgemäßen Verfahren und der erfindungsgemäßen Tunnelofen-Anlage zum Brennen von Lochziegeln (die teilweise auch als "Gittersteine" bezeichnet werden) mit vertikaler Gasdurchströmung wird eine gezielte und intensive Durchströmung des Brenngutes (d. h. des sogenannten Besatzes) erreicht. Dabei wird aufgrund doppellagiger Formlingsstapelung einerseits eine wesentlich größere - nämlich doppelte - Ziegelmenge als bei einlagiger Arbeitsweise gebrannt und andererseits der Vorteil kurzer Produktdurchströmung aufgrund noch kurzer Kanäle beibehalten und eine große Brennleistung ohne schwindungsbedingte Rißbildung (Aufheiz- und/oder Kühlrisse) erzielt.

Die kurzen Umwälzkreise, die sich maximal über das Maß von 20 Lochziegel-Reihen erstrecken, mit gleichmäßiger Gasströmung auf gesamter Tunnelbreite bewirken bei geringem Energieverbrauch eine hohe Gasströmung, womit die Lochziegel gleichmäßig umströmt und durchströmt werden. Mit dem erfindungsgemäßen Verfahren und Tunnelofen-System lassen sich kurze Reisezeiten von unter 10 Stunden, bei manchen Materialien sogar von etwa 5 Stunden realisieren. Da weniger Transportmittel, insbesondere Wagen, pro Produkt-Tonnage erforderlich sind als bei einlagiger Behandlung, ist eine Investitionseinsparung gegeben.

Aufgrund erheblicher Energie- und Investitionseinsparung sowie Qualitätssteigerung ist die Erfindung von großem wirtschaftlichen Nutzen.

Die Erfindung ist für den sogenannten Flachbrand von Lochziegeln konzipiert und weist einen niedrigen Brennkanal auf, dessen den Formlings-Durchlaß höhenmmäßig bestimmenden deckenseitigen Elemente, insbesondere mit Heißgas-Durchströmöffnungen versehene Deckenplatten, etwa 50-100 mm oberhalb der Brenngut-Oberkante verlaufen. Dasselbe Konzept kann auch für den einlagigen Dachziegel-Brand mit vertikal oder aus der Vertikalen bis max. 45° schräggestellten Dachziegeln verwendet werden.

Auf der Zeichnung sind Ausführungsbeispiele der Erfindungsgedanken dargestellt. Es zeigen:

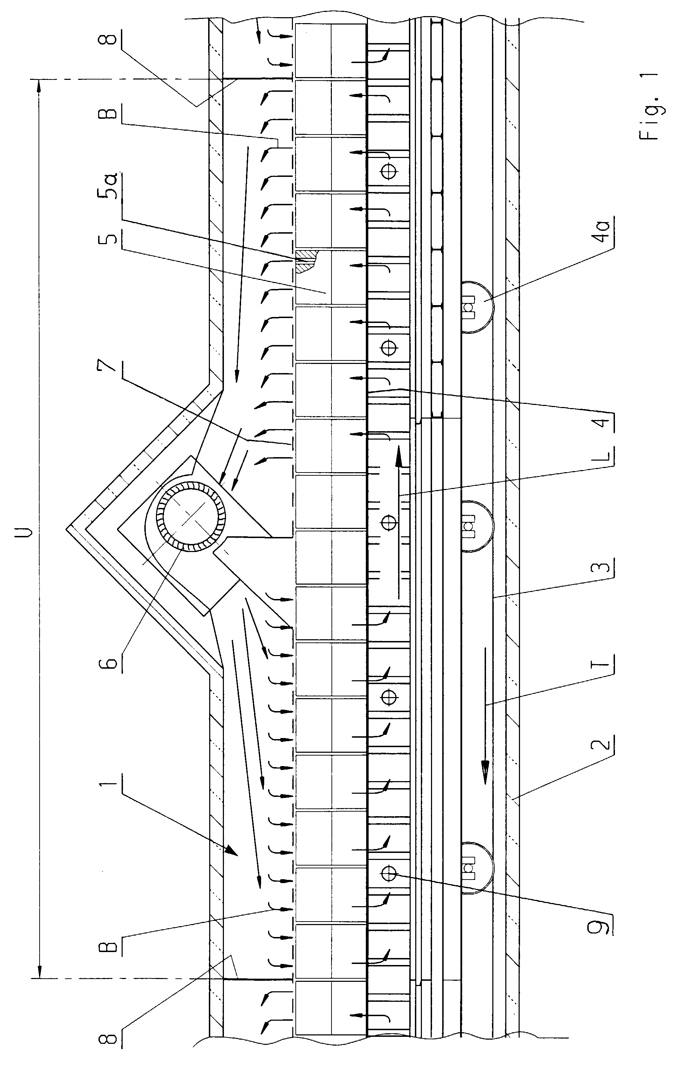

- Fig. 1: eine Längsschnitt-Darstellung eines Teilbereiches eines erfindungsgemäßen Tunnelofens mit vertikaler Gasdurchströmung von zweilagig angeordneten Querreihen von Lochziegel-Formlingen und mehreren Umwälzkreisen mit im Bereich der Ofendecke angeordnetem Querstromventilator, der einerseits Gas durch die Lochziegel nach oben saugt und andererseits Gas nach unten bläst,
- Fig. 2: einen Horizontalschnitt durch den Tunnelofen oberhalb einer mit Schlitzen versehenen Zwischendecke (im Bereich der Umwälzkreise) und
- Fig. 3: einen Horizontalschnitt durch eine gegenüber Fig. 4 abgeänderte Ausführung mit einer Zwischendecke mit Rundlöchern.

Die Erfindung betrifft einen insgesamt mit 1 bezifferten Tunnelofen für die Ziegelfertigung, insbes. für die Lochziegel-Fertigung, wobei eine Anordnung von Lochziegel-Formlingen auf den Schnittflächen erfolgt und dementsprechend die Löcher vertikal durchströmt werden. Zwecks Steigerung der Produktion wird das insbesondere aus Lochziegel-Formlingen bekannter Abmessungen bestehende Brenngut (der sogen. Besatz) doppellagig gestapelt - bei kleinem Maß zwischen den beiden Schnittflächen kann auch eine dreilagige Formlingsanordnung erfolgen. Dachziegel werden einlagig gebrannt, wobei diese Formlinge vertikal oder etwas aus der Vertikalen geneigt schräggestellt durch den Tunnelofen 1 transportiert werden. Die Lochziegel-Stapelhöhe kann bis etwa 800 mm betragen. Oberhalb der zu brennenden Ziegel- oder Dachziegel-Formlinge verbleibt ein Spalt von 50-100 mm Höhe bis zur Deckenkonstruktion.

Im höhenmäßigen Abstand zu einem Tunnelboden 2 ist eine Laufbahn 3 für vertikal gasdurchströmbar ausgebildete Transportunterlagen 4 vorgesehen. die Räder sind mit 4a beziffert.

Die Lochziegel-Formlinge 5 werden durch hintereinanderliegende sowie in Tunnellängsrichtung umwälzende Umwälzkreise U des Brenntunnels bewegt. Die Pfeile in der Zeichnung bedeuten:
B = vertikale Beblasung- und Durchströmungsrichtung
L = Gas-Längsströmung durch den Brenntunnel
T = Transportrichtung des zu brennenden Gutes

In jedem Umwälzkreis U werden die Formlinge 5 an einer einen gezielten vertikalen Gasstrom B durch das Brenngut blasenden Ventilationseinrichtung - mit im Ofendeckenbereich angeordnetem Querstromventilator 6 - taktweise oder kontinuierlich vorbeigeführt.

Dabei wird jeder Formling 5 mittels erzwungener Konvektion gleichmäßig umströmt und durchströmt - die diesbezüglichen Gassen sind die Formlingskanäle 5a sowie die querverlaufende Spalten a und die längsverlaufende Spalten b zwischen benachbarten Formlingen 5.

In bevorzugter Weise werden die einzelnen Formlinge 5 des zu brennenden Besatzes mit ihren eine Gitterfläche darstellenden Schnittflächen auf einer Horizontalebene in solcher Weise angeordnet, daß die sich aus dem Lochanteil der Gitterfläche der Formlinge 5 und den Spalten a, b zwischen benachbarten Formlingen 5 ergebenden durchströmbaren Flächen so aufeinander abgestimmt sind, daß eine gleichmäßige Durchströmung sowie Umströmung der Formlinge 5 erfolgt und daß dabei sich eine der Massenverteilung innerhalb des Formlingsquerschnitts entsprechende Gasströmung durch die Besatzgrundfläche ergibt. Bei einer solchen Anordnung der Formlinge 5 wirkt der Besatz selbst als Strömungsgitter.

In bevorzugter Weise ist der Brenntunnel oberhalb der Bewegungsbahn des zu brennenden Besatzes mit einer Zwischendecke 7 versehen, und der sich oberhalb dieser Zwischendecke 7 erstreckende Raum über quer zur Transportrichtung T verlaufende Trennwände 8, kammerbildend unterteilt. Jede dieser Kammern nimmt einen Querstromventilator 6 auf. Anstelle der besonders bevorzugten und zeichnerisch fixierten Lösung mit vertikal und quer zur Transportrichtung T verlaufenden Trennwänden kann selbstverständlich auch eine abgeänderte Ausführung Anwendung finden, bei welcher jedem Querstromventilator 6 eine einerseits den Ansaugbereich und andererseits den Ausblasbereich übergreifende Haube zugeordnet ist. In allen Ausführungsformen mit Querstromventilator 6 wird die Länge eines Umwälzkreises U von der Querabschottung des sich über dem zu brennenden Besatzes erstreckenden Kanalteil des Tunnelofens 1 bestimmt.

Die Zwischendecke 7 im Bereich der Umwälzkreise U erstreckt sich mit möglichst geringem Abstand oberhalb der Besatzoberseite. Die der Gasdurchströmung dienenden Öffnungen können lochartig oder schlitzartig ausgebildet sein können. Durch die Loch- oder Schlitz-Anordnung in der Zwischendecke 7 wird die Durchströmfläche im Vergleich zur Besatzfläche erheblich reduziert, vorzugsweise beträgt diese Durchströmfläche bis etwa 50 %.

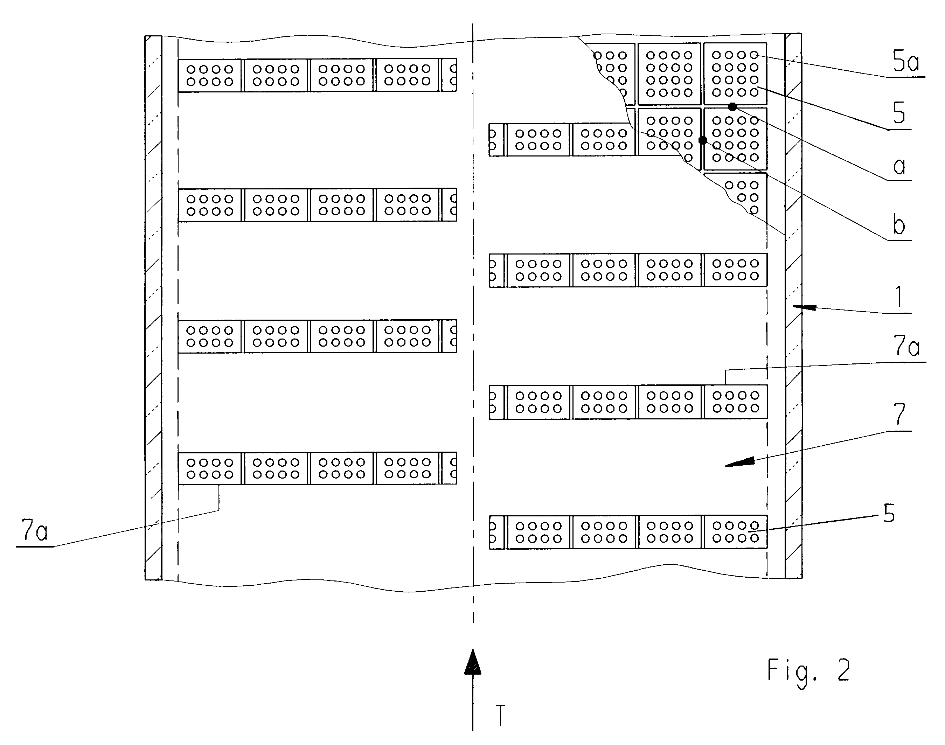

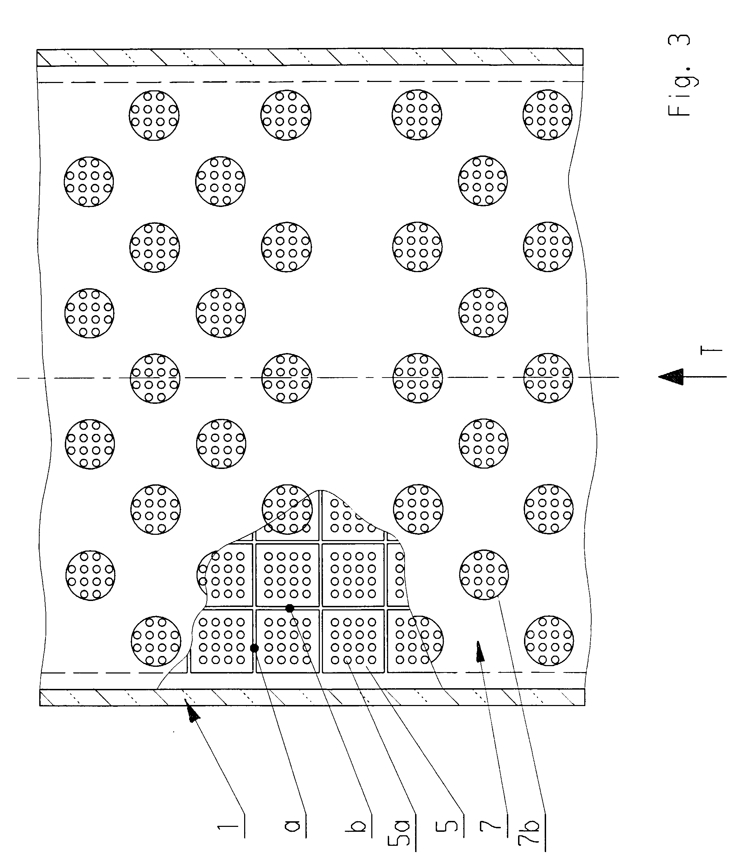

In bevorzugter Weise sind die mit 7a, 7b bezifferten Durchblasöffnungen gegeneinander versetzt. Die Ausführungen gemäß Fig. 2 und 3 sollen lediglich das Grundprinzip, jedoch nicht eine zwingend vorgeschriebene Gestaltungsform offenbaren.

In bevorzugter Weise verlaufen die Durchblasöffnungen 7a, 7b in quer zur Formlings-Transportrichtung T verlaufenden Reihen und dabei in einer gegeneinander versetzten Anordnung. Gemäß Fig. 2 sind die Durchblasöffnungen 2a von quer zur Transportrichtung T ausgerichteten Schlitzen gebildet. Dabei können diese Schlitze 7a in der Zwischendecke 7 sich jeweils etwa über die halbe Tunnelbreite (Kanalbreite) erstrecken und abwechselnd auf der linken oder rechten Seite vorgesehen sein.

Bei der Ausführung gemäß Fig. 3 sind die Durchblasöffnungen 7b von in Querreihen-Anordnung vorgesehenen Löchern gebildet, wobei die Löcher der einen Reihe jeweils auf Lücke zu denjenigen der anderen Reihe angeordnet sind. Die Lochform kann rund, oval oder polygonal ausgebildet sein.

Bei allen vorerwähnten Ausführungsformen wird zwischen den entgegengesetzten vertikalen Gasbewegungen B jeweils mindestens eine Formlings-Querreihe (bei der Lochziegel-Fertigung) in einer Ruheposition beblasungsfrei und/oder sogfrei gehalten. Besonders bevorzugt ist eine Ruhezone von ca. 1 m.Dabei weist die Zwischendecke 7 zwischen dem Ansaugbereich und Ausblasbereich einen loch- und/oder schlitzfreien Bereich auf, wie dies beispielhaft in Fig. 3 für den Bereich einer Formlings-Querreihe dargestellt ist.

Die Brenner sind mit 9 beziffert. Sie können bei sogen. Seitenbefeuerung im Solzugbereich und bei sogen. Deckenbefeuerung saugseitig oberhalb der Formlingsbewegungsbahn angeordnet sein.

## Patentansprüche

1. Verfahren zum Brennen von Ziegeln, wie Lochziegeln od. dgl., bei dem heiße Gase (Heißluft und/oder Rauchgas) das Brenngut durchströmt, mit den Merkmalen:
a) die Lochziegel-Formlinge (5) werden auf gasdurchströmbaren Transportunterlagen (4) von bodenwärts isolierten Ofenwagen für Flachbrand in zwei- oder dreilagigen Querreihen sowie jeweils mit vertikaler Lochachsen-Erstreckung und in fluchtender Anordnung aufgesetzt und mittels der Transportunterlagen (4) durch hintereinanderliegende sowie die für den Brennprozeß benötigten Gase in Tunnellängsrichtung auf kurzer Länge, insbesondere max. 6,5 m, umwälzende Umwälzkreise (U) eines Ofentunnels (1) bewegt, und
b) in jedem Umwälzkreis (U), mit der Tunneldecke (Ofendecke) (1a) zugeordnetem, mit seiner Rotationsachse quer zur Transportrichtung (T) verlaufendem Querstromventilator (6), wird der Besatz mittels erzwungener Konvektion in vertikalen Gasströmen (B) durchlüftet, wobei an einem Ende eine vertikale Gasansaugung und am anderen Ende eine vertikale Gasausblasung vorhanden und dazwischen mindestens eine Formlings-Querreihe ohne erzwungener Konvektion in Ruheposition, nämlich nahezu blas- oder sogfrei, vorgesehen ist.

2. Verfahren nach Anspruch 1, dadurch gekennzeichnet, daß die Gasansaugung und Gasausblasung in jedem Umwälzkreis (U) jeweils über mindestens zwei Formlings-Querreihen erfolgt und der Umwälzkreis (U) sich über maximal 20 Lochziegel-Querreihen erstreckt.

3. Verfahren nach Anspruch 1, dadurch gekennzeichnet, daß der Besatz auf der Ofentunnel-Breite stets nur stellenweise einem erzwungenen Konvektionsstrom ausgesetzt wird und die einzelnen von beschleunigtem Gas durchströmten Stellen innerhalb der Besatzgrundfläche in bezug auf den Formlingstransport versetzt sind.

4. Verfahren nach Anspruch 1, dadurch gekennzeichnet, daß der Besatz von Lochziegel-Formlingen (5) gebildet wird, die mit ihren eine Gitterfläche darstellenden Schnittflächen auf einer Horizontalebene liegen und daß die sich aus dem Lochanteil der Gitterfläche der Formlinge (5) und den Spalten (a, b) zwischen benachbarten Formlingen (5) ergebenden durchströmbaren Flächen so aufeinander abgestimmt sind, daß eine gleichmäßige Durchströmung sowie Umströmung der Formlinge (5) erfolgt und daß dabei sich eine der Massenverteilung innerhalb des Formlingsquerschnitts entsprechende Gasströmung durch die Besatz-Grundfläche ergibt.

5. Verfahren nach mindestens einem der Ansprüche 1 bis 4, dadurch gekennzeichnet, daß die Lochziegel-Formlinge (5) in einer Anordnung mit fluchtend übereinanderliegenden Löchern (5a), mit vertikaler Lochachse, den Ofentunnel (1) mit geringem Abstand - insbesondere von 50 bis 100 mm - zu einer im Bereich der Umwälzkreise (U) mit Blas- und Saugöffnungen versehenen Zwischendecke (1b) durchlaufen.

6. Tunnelofen-Anlage zum Brennen von Lochziegel-Formlingen od. dgl., wobei der Besatz von heißen Gasen durchströmt wird, sowie zur Durchführung des Verfahrens nach einem der Ansprüche 1 bis 5, dadurch gekennzeichnet, daß in einem für zwei- oder dreilagigen Flachbrand von Lochziegeln oder einlagigen Brand von vertikal oder schräg gestellten Dachziegeln ausgebildeten Ofentunnel (1) mehrere hintereinanderliegende kurze Umwälzkreise (U) - insbesondere von max. 6,5 m - angeordnet sind, die jeweils einen im Bereich der Ofendecke (1a) angeordneten Querstromventilator (6), mit quer zur Transportrichtung (T) verlaufender Rotationsachse, aufweisen, womit der Besatz mittels erzwungener Konvektion in vertikalen Gasströmen (B) durchlüftbar ist - wobei innerhalb eines jeden Umwälzkreises (U) an einem Ende über mindestens zwei Formlings-Querreihen vertikal angesaugt, mindestens eine Formlings-Querreihe in Ruheposition ohne erzwungener Konvektionsströmung verharrt und Ende über mindestens zwei Formlings-Querreihen vertikal angesaugt wird mindestens eine Formlings-Querreihe in Ruheposition ohne erzwungener Konvektionsströmung verharrt und am anderen Ende über mindestens zwei Formlings-Querreihen vertikal geblasen wird - und daß die Umwälzstrom-Rückführung in Tunnellängsrichtung verlaufend unterhalb der Transportunterlagen (4) vorgesehen ist.

7. Tunnelofen nach Anspruch 6, dadurch gekennzeichnet, daß das Querstromgebläse (6) oberhalb einer nahe - insbesondere bis etwa 50 - 100 mm -an die Besatzoberseite heranreichenden gelochten Zwischendecke (7) angeordnet ist.

8. Tunnelofen nach Anspruch 6 oder 7, dadurch gekennzeichnet, daß die Zwischendecke (7) mit Durchblasöffnungen (7a, 7b) versehen ist, die in quer zur Formlings-Transportrichtung (T) verlaufende Reihen - und dabei gegeneinander versetzt - angeordnet sind.

9. Tunnelofen nach Anspruch 8, dadurch gekennzeichnet, daß die Durchblasöffnungen (7a) von quer zur Transportrichtung (T) ausgerichteten Schlitzen gebildet sind.

10. Tunnelofen nach Anspruch 9, dadurch gekennzeichnet, daß die Schlitze (7a) in der Zwischendecke (7) sich jeweils etwa über die halbe Tunnelbreite erstrecken und abwechselnd auf der linken oder rechten Hälfte vorgesehen sind.

11. Tunnelofen nach Anspruch 8, dadurch gekennzeichnet, daß die Durchblasöffnungen (7b) von in Querreihen-Anordnung vorgesehenen Löchern gebildet sind, wobei die Löcher der einen Reihe jeweils auf Lücke zu denjenigen der anderen Reihe angeordnet sind.

12. Tunnelofen nach mindestens einem der Ansprüche 6 bis 11, dadurch gekennzeichnet, daß unterhalb vom Querstromventilator (6) in der Zwischendecke (7) ein querverlaufend ausgerichteter ungelochter Streifen vorhanden ist, der sich in Tunnellängsrichtung über das entsprechende Maß mindestens eines Formlings (5) erstreckt.
